# EUROPEAN PATENT APPLICATION

(11) **EP 2 677 674 A1**
(43) Date of publication of application: **25.12.2013**
(21) Application number: 13172602.8
(22) Date of filing: 19.06.2013
(51) Int. Cl.: H04B 10/079, H04B 10/2513

(54) **A device for stabilising the optical-path length**

(30) Priority: 21.06.2012 SI 201200216
(71) Applicant: Cobik, 5250 Solkan (SI)
(72) Inventor: Tratnik, Jurij, 1290 Grosuplje (SI); Vidmar, Matja, 5000 Nova Gorica (SI); Batagelj, Bostjan, 1000 Ljubljana (SI)
(74) Representative: Ivancic, Bojan

(57) **Abstract**

The present invention relates to a device for stabilising the optical path length (2) between the transmitter and the receiver of a signal (1), in particular for the radio-frequency signal of demanding applications, where in the transmission of the signal (1) a constant time delay of said signal is important. In the device for stabilising the optical signal (1) according to the invention a change in wavelength of the light source (6), the so-called wavelength tuning, and the chromatic dispersion of the optical paths are efficiently used. By changing the wavelength of the light from said light source (6), the group velocity of the light or speed of the envelope of the modulated signal is changed in order to properly correct the time delay or phase of the signal (1) which is transmitted through said optical path (2).

## Description

The present invention relates to a device for stabilising the length of the optical path between the transmitter and the receiver of a signal, in particular for the radio-frequency signal of demanding applications where a constant time delay of said signal is important.

There is a variety of known devices of said kind that for said optical path stabilisation use optical-mechanical delay lines, regulation of the temperature of the compensation fibre and the like. All of these known devices have a common drawback which is reflected in their relatively slow response to any change in the optical path length.

The object of the present invention is to provide a device for stabilising the length of the optical path between the transmitter and the receiver of the signal by means of which a disadvantage of known solutions is to be eliminated.

The object as set above is solved according to the invention by the features given in the characterising portion of the claim 1. Details of the invention are disclosed in the subclaims. In the device for stabilising the optical path length according to the invention a change in wavelength of the light source - so-called wavelength tuning - and also the chromatic dispersion of the optical path are efficiently used. By changing the wavelength of the light from said light source the group velocity of the light or speed of the envelope of the modulated signal is changed in order to properly correct the time delay or phase of the signal which is transmitted through said optical path. Since according to the invention it is expected that the wavelength of the light from said light source is preferably changing by the current which is supplied to said light source, the adjustments are very fast and are in the order of 10+ kHz. Such a device according to the invention is therefore suitable for correcting changes in the optical path that occur due to vibrations, microphony and the like on a transmission path.

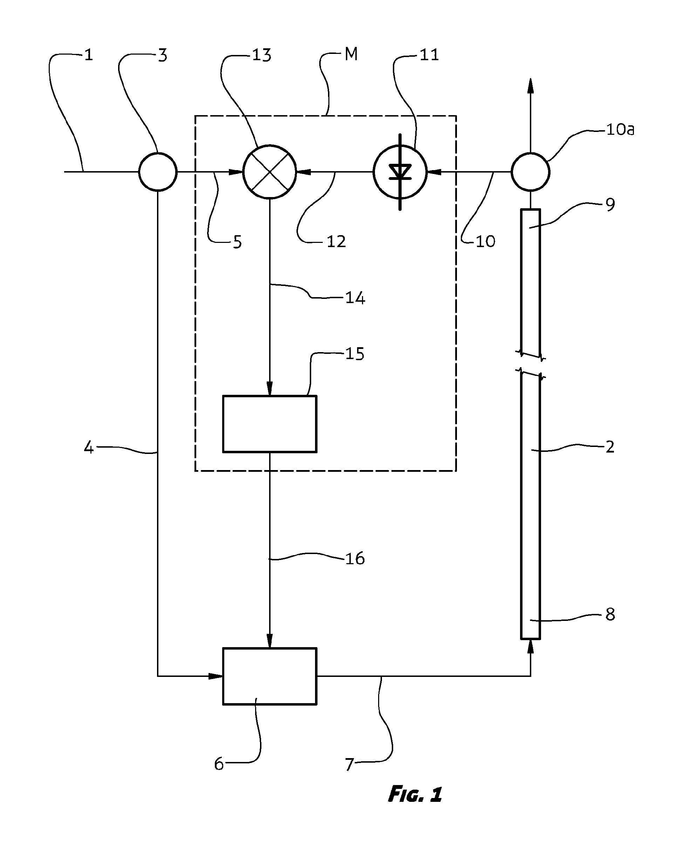

The invention is hereinafter described in more detail by way of an example and with the help of the accompanying drawing which schematically shows a device according to the invention.

A system for the transmission of wanted signal 1, such as a radio-frequency (RF) signal, through optical path 2 comprises a splitter 3 of said RF signal 1, which divides the signal into a first branch 4 and a second branch or the reference signal 5. Said first branch 4 of the RF signal 1 is guided in the light source 6, wherein Said RF signal 1 modulates an optical signal which is generated by said light source 6. Said modulation is also possible with the help of an electro-optical modulator, which optionally follows directly after said light source 6. The exiting modulated light signal 7 from said light source 6 is further led to an inlet end 8 of the optical path 2, whereby said optical signal 7 is transported to an outlet end 9 of said optical path 2. The exiting transferred actual optical signal 10 from said outlet end 9 of optical path 2 is led through an appropriate splitter 10a to a stabilisation module M.

A detailed structure and function of said stabilisation module M is described hereinafter. Said stabilisation module M comprises a light-electric converter 11 in which optical signal 10 is converted into an RF signal 12. Said RF signal 12 is further led into a phase comparator 13 into which the reference wanted signal 5 is also led. Said phase comparator 13 compares the phase of said RF signal 12 and the phase of said reference signal 5, and on the basis of the phase difference of the signals 5, 12 an appropriate electrical signal 14 is transmitted to the controller 15. According to said signal 14, said controller 15 via a control signal 16, outgoing from said stabilisation module M, controls said light source 6. Said control of the light source 6 is carried out by changing at least one parameter of the light source 6. In the preferred embodiment of the invention it is provided for that said light source 6 is controlled by changing the supply current of the light source 6 resulting in a very quick adjustments, in the magnitude of 10+ kHz. Control is also possible on the basis of changing the temperature of the light source 6 but in this case the response is relatively slow, <1 Hz, which makes such a device suitable for compensating slow changes in the optical path length.

In the preferred embodiment of the invention it is provided for that said light source 6 is a laser. Further, it is provided for that said light-electric converter 11 is a photo-diode. Of course, according to the invention control of said light source 6 is also possible by means of other parameters without departing from the spirit and scope of the invention.

## Claims

1. A device for stabilising the optical path length (2) between the transmitter and the receiver of a signal (1), in particular for the radio-frequency signal of demanding applications where in the transmission of the signal a constant time delay of said signal is important, ***characterised in that*** it comprises a splitter (3) of a signal (1), which divides said signal (1) into a first branch (4) representing the wanted signal, said wanted signal (4) being led in a light source (6), where said signal (4) modulates the optical signal generated by said light source (6), and a modulated optical signal (7) exiting said light source (6) is further led to an inlet end (8) of said optical path (2) by means of which said light signal (7) is transported to an outlet end (9) of said optical path (2), wherein the transferred output signal representing an actual optical signal (10) and exiting said outlet end (9) of said optical path (2) is via a splitter (10a) led to a stabilisation module (M), and which divides said signal (1) into a second branch (5) representing a reference signal which is guided into a stabilisation module (M), a control signal (16) exiting said stabilisation module (M) controls at least one of the parameters of said light source (6).

2. A device for stabilising the optical path length (2) according to claim 1, ***characterised in that*** said stabilisation module (M) comprises a light-electric converter (11) in which said light signal (10) is converted into an electrical signal (12) which is further led into the phase comparator (13) where on the other hand said reference or wanted signal (5) is also guided, wherein a phase comparator (13) based on the phase difference of the signals (5, 12) forwards the corresponding electrical signal (14) to a controller (15) which according to said signal (14) properly affects a change of at least one of the parameters of said light source (6).

3. A device for stabilising the optical path length (2) according to any of the preceding claims, ***characterised in that*** said light source (6) is controlled by changing the supply current of the light source (6).

4. A device for stabilising the optical path length (2) according to any of the preceding claims, ***characterised in that*** said light source (6) is controlled by changing the temperature of the light source (6).

5. A device for stabilising the optical path length (2) according to any of the preceding claims, ***characterised in that*** said light source (6) is a laser.
